(19) Europäisches Patentamt
European Patent Office
Office européen des brevets

(11) Veröffentlichungsnummer : **0 483 938 B1**

(12) **EUROPÄISCHE PATENTSCHRIFT**

(45) Veröffentlichungstag der Patentschrift :
**13.07.94 Patentblatt 94/28**

(51) Int. Cl.$^5$ : **C01B 13/11**

(21) Anmeldenummer : **91250294.5**

(22) Anmeldetag : **28.10.91**

(54) **Vorrichtung zur Erzeugung von Ozon aus Sauerstoff.**

(30) Priorität : **02.11.90 DE 4035272**

(43) Veröffentlichungstag der Anmeldung :
**06.05.92 Patentblatt 92/19**

(45) Bekanntmachung des Hinweises auf die
Patenterteilung :
**13.07.94 Patentblatt 94/28**

(84) Benannte Vertragsstaaten :
**CH DE FR GB LI**

(56) Entgegenhaltungen :
**EP-A- 0 414 432**
**DE-A- 3 731 168**
**GB-A- 1 099 428**

(56) Entgegenhaltungen :
**PATENT ABSTRACTS OF JAPAN, vol. 12, no.**
**117 (C-487)13. April 1988 & JP-A-62 241 807 (**
**YUUSHIN ENG KK ) 22. Oktober 1987**
**PATENT ABSTRACTS OF JAPAN, vol. 14, no.**
**453 (C-764)28. September 1990 & JP-A-2 180**
**703 ( NORITAKE CO. ) 13. Juli 1990**

(73) Patentinhaber : **SORBIOS GmbH**
**Ackerstrasse 71-76**
**D-13355 Berlin (DE)**

(72) Erfinder : **Stiehl, Hans-H., Dr.**
**Nienkemper Strasse 2**
**W-1000 Berlin 37 (DE)**
Erfinder : **Schweckendiek, Jürgen, Dr.**
**Suarezstrasse 2**
**W-1000 Berlin 19 (DE)**

(74) Vertreter : **Pfenning, Meinig & Partner**
**Kurfürstendamm 170**
**D-10707 Berlin (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 483 938 B1

## Beschreibung

Die Erfindung betrifft eine Vorrichtung zur Erzeugung von Ozon aus Sauerstoff nach der Gattung des Hauptanspruchs.

Aus der DE-OS 37 31 168 ist eine Vorrichtung zur Erzeugung von Ozon aus Sauerstoff bekannt, die zwei durch ein rohrförmig ausgebildetes Dielektrikum hoher Leitfähigkeit getrennte Elektroden aufweist. Dabei ist die Entladungselektrode als diskretes Bauelement ausgebildet und liegt eng am Umfang des Dielektrikums an. Die vom Sauerstoff umströmte Entladungselektrode bildet eine nicht geschlossene Fläche und ist drahtförmig ausgeführt. Durch Anlegen eines elektrischen Feldes wird eine Entladung im die Entladungselektrode umgebenden Gasraum und auf dem Dielektrikum, das aus Keramik besteht, ausgelöst. Mit dieser Vorrichtung, bei der Ozon nach dem Prinzip der stillen elektrischen Entladung erzeugt wird, werden im Vergleich zu anderen Anordnungen bei mittelfrequenter Entladung hohe Flächenproduktionsdichten erzielt. Da eine drahtartige "offene" Elektrode verwendet wird, ist eine direkte Kühlung möglich. Als Elektrodendraht wird Edelstahl, Nickel oder Kupfer verwendet. Die Ozonerzeugung mit der bekannten Vorrichtung ermöglich zwar hohe Flächenproduktionsdichten im mittelfrequenten Betrieb, die Energieausbeute und die erzielbare Flächenproduktionsdichte bei hohen Konzentrationen sind jedoch begrenzt und liegen zum Teil unter vergleichbaren Ergebnissen von Ozonerzeugungsvorrichtungen in konventioneller Technik, bei der die Anordnung aus Elektrode-Dielektrikum-Luftspalt-Dielektrikum bestehen.

Für den technischen Einsatz eines Ozonerzeugers ist die Energieausbeute von großer Bedeutung. Neuere Anwendungen von Ozon erfordern darüber hinaus besonders hohe Ozonkonzentrationen. Als Beispiel dafür kann die Halbleiterindustrie genannt werden. Ozon wird dort zunehmend für Reinigungsprozesse und als Prozeßgas verwendet. Die Verfügbarkeit hoher Ozonkonzentration führt dort nicht nur zur Beschleunigung von Reinigungsprozessen, sondern auch zu qualitativen Verbesserungen, zum Beispiel abgeschiedener $SiO_2$-Schichten.

Der vorliegenden Erfindung liegt daher die Aufgabe zugrunde, Vorrichtungen zur Erzeugung von Ozon aus Sauerstoff gemäß dem Oberbegriff des Hauptanspruchs zu schaffen, bei denen die Energieausbeute und die Flächenproduktionsdichte bei hohen Konzentrationen verbessert werden.

Diese Aufgabe wird erfindungsgemäß durch die kennzeichnenden Merkmale des Hauptanspruchs gelöst.

Durch die Verwendung von Wolfram, Molybdän, Niob oder Tantal für die drahtartige Entladungselektrode hat sich überraschenderweise herausgestellt, daß sich die Ausbeute gegenüber Vorrichtungen nach dem Stand der Technik, bei denen Edelstahl als Entladungselektrode verwendet werden, um 20 bis 50 % gesteigert werden kann.

Darüber hinaus können mit Elektroden aus Wolfram Grenzkonzentrationen von über 400 g Ozon/m³ erzielt werden.

Die Erhöhung der erzielbaren Ozonkonzentrationen bietet darüber hinaus auch in traditionellen Anwendungen Vorteile, da dadurch Reaktionsgeschwindigkeiten und Lösegeschwindigkeiten erhöht werden.

Bei Ozonanwendungen in der Halbleiterindustrie werden hohe Anforderungen an die Reinheit des Prozeßgases gestellt. Verunreinigungen, die aus dem Entladungsvorgang resultieren, müssen vermieden werden. Elektrodenmaterialien, die nur aus einem chemischen Element bestehen, sind daher vorteilhaft.

In der DE-OS 37 31 168 werden zwar neben Edelstahl noch andere Materialien, nämlich Nickel und Kupfer verwendet, allerdings gibt es keinen Hinweis auf die Beeinflussung der Effizienz des Entladungsprozesses durch die Art der verwendeten Materialien, so daß der Schluß zugelassen werden kann, daß in Analogie zu konventionellen Ozonerzeugern im wesentlichen an eine hinreichende Beständigkeit des Materials gedacht wurde. Bei Verwendung von Luft als Einsatzgas wurden Katalysatoren vorgeschlagen, um den Wirkungsgrad der Ozonerzeugung zu erhöhen (DE-AS 19 43 629), wobei in Sauerstoff allerdings der Wirkungsgrad nicht verbessert wurde. In der DE-OS 35 17 078 wird vorgeschlagen, die metallische Elektrode auf ihrer Betriebsseite mit einer Chromschicht zu überziehen bzw. sie direkt aus Chrom herzustellen, wobei auf eine Verbesserung des Wirkungsgrades im Arbeitspunkt hingewiesen wird. Untersuchungen mit chromreichen Schichten in einer Anordnung gemäß der DE-OS 37 31 168 führten nicht zu einer Verbesserung der Ausbeute, ebenso nicht die Verwendung von Palladium, Nickel-Nickel-Schichten, wie Untersuchungen zeigten.

In der europäischen Offenlegungsschrift 0 102 569 wird eine Vorrichtung zur Erzeugung von Ozon beschrieben, bei deren Herstellung eine ungebrannte Keramikmasse plattenförmig geformt wird, auf deren Oberfläche mittels Siebdrucktechnik eine Wolframpuder aufweisende Paste in Linien aufgebracht wird, die einen Teil der Entladungselektroden bilden. Anschließend wird die gesamte Anordnung zu einem hohlen Zylinder geformt, der gesintert und gebrannt wird. Die Elektroden, die Wolframpuder enthalten, werden zur Vermeidung von Oxydation anschließend mit Nickel beschichtet. Bei diesem bekannten Gegenstand wird zwar beispielsweise Wolframpuder wegen eines speziellen Herstellungsverfahrens des Aufbringens der Elektroden in Siebdrucktechnik verwendet, wobei anschließend eine Sinterung stattfindet und die gesamte Anordnung gebrannt wird, aber es wird gleichzeitig darauf hingewiesen, daß zur Verhinderung der Oxydation eine Beschichtung von Nickel vorgesehen sein muß. Hierbei bekommt der Fachmann daher keine Anregung zur Verwendung von Wolfram für eine Verbesserung des Wirkungsgrades von Ozonerzeugern, im Gegenteil erhält der Fachmann den Hinweis, daß eine derartige Verwendung nicht sinnvoll ist, da eine Oxydation auftritt.

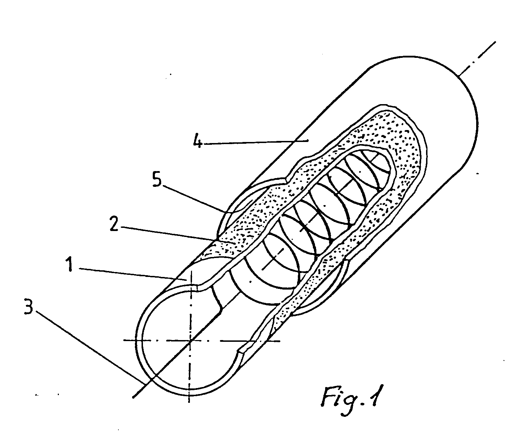

Die im folgenden offenbarten Versuchsergebnisse wurden mit einer Anordnung gemäß der DE-OS 37 31 168 erzielt, die in Fig. 1 dargestellt ist und bei der ein Dielektrikum 1 verwendet wird, das als langgestrecktes Rohr, bestehend aus keramischen Materialien, insbesondere $Al_2O_3$ besteht, ausgebildet ist. Als Entladungselektrode 3 wird ein Draht mit einem Durchmesser von vorzugsweise 0,5 mm, der aber auch größer beispielsweise 1 mm sein kann, verwendet, der spiralförmig gewickelt ist und unter Spannung in das Innere des rohrförmigen Dielektrikums 1 eingesetzt ist. Das rohrförmige Dielektrikum 1 wird von einem Außenrohr 4 umgriffen, wobei zwischen dem Raum zwischen Gegenelektrode 2 und Außenrohr 4 ein Kühlmedium 5, nämlich Wasser geleitet wird, das gleichzeitig als Gegenelektrode dient. Der Draht besteht vorzugsweise aus Molybdän oder Wolfram, es kann aber auch Niob oder Tantal verwendet werden, bei deren Anwendung allerdings ein etwas schlechteres Ergebnis als bei Molybdän und Wolfram geliefert wird.

Im folgenden werden die bei der Erzeugung von Ozon wichtigen Größen angegeben:

Ozonproduktion (P):

Die Ozonproduktion ist diejenige Menge (Masse) Ozon, die mit der Vorrichtung, die von einem sauerstoffhaltigen Gasstrom oder Sauerstoff durchströmt wird, während einer gegebenen Zeit hergestellt werden kann. Sie wird durch die Messung des Gasvolumenstroms ($\dot{v}$) und der Ozonkonzentration (c) bestimmt.

$$P = c \cdot \dot{v}$$

Die Vorrichtung zur Erzeugung von Ozon kann im wesentlichen durch die Energieausbeute (A) und die Flächenproduktionsdichte (P/F) charakterisiert werden. Die Flächenproduktionsdichte gibt an, wieviel Ozon pro Zeiteinheit und (Dielektrikums)-Flächenelement erzeugt werden kann, wobei hohe Flächenproduktionsdichten in der Regel geringe Kosten für Investitionen und geringe Bauformen bei gegebener Leistung bedeuten.

Bei einer gegebenen Vorrichtung zur Ozonerzeugung kann die Flächenproduktionsdichte in der Regel durch die elektrische Leistung beeinflußt werden, die in die Vorrichtung eingetragen wird. Es gilt:

$$\frac{P}{F} = A \cdot \frac{N_{el}}{F},$$

das heißt, die Flächenproduktionsdichte ist gleich der Ausbeute (Ozonmenge pro Energieaufwand) mal Flächenleistungsdichte.

Bei gegebenem Gasdurchfluß und gegebener Kühlung wächst mit wachsener Flächenleistungsdichte zunächst die Produktion, d.h. die Flächenproduktionsdichte. Da aber mit wachsender elektrischer Leistung auch die Temperatur in der gegebenen Vorrichtung ansteigt, wird die Rückreaktion zu Sauerstoff begünstigt. Somit wächst die Flächenproduktionsdichte nicht mehr linear mit der Flächenleistungsdichte, d.h. die Ausbeute sinkt mit wachsender Flächenleistungsdichte.

$$A = A(P/F)$$

Für eine Optimierung soll A (Ausbeute) möglichst hoch sein bei großem P/F (Flächenproduktionsdichte). Die Rückreaktion von Ozon zu Sauerstoff wird außerdem durch wachsende Ozonkonzentration begünstigt. Bei einer vorgegebenen Anordnung wird die Ausbeute mit wachsender Ozonkonzentration sinken:

$$A = A[(P/F), c]$$

Ziel bei der Entwicklung von Vorrichtung zur Ozonerzeugung ist es, bei möglichst großem P/F (Flächenproduktionsdichte) und möglichst hoher Konzentration eine hohe Ausbeute A zu erzielen.

Die im folgenden angegebenen Tabellenwerte wurden unter gleichen Bedingungen gewonnen. Zum Vergleich wird die Ausbeute bei etwa gleicher Flächenproduktionsdichte und Konzentration herangezogen.

Erzielbare Energieausbeute bei gleicher Anordnung, Konzentration und Flächenproduktionsdichte in Abhängigkeit vom Elektrodenmaterial

Tabelle

| $c \left[\dfrac{g}{m^3}\right]$ | $P/F \left[\dfrac{g}{hm^2}\right]$ | $\dfrac{1}{A} \left[\dfrac{wh}{g}\right]$ | Elektrode |
|---|---|---|---|
| 40 - 50 | 1300 - 1500 | 9,0 | W |
| 40 - 50 | 1300 - 1500 | 10,0 | Mo |
| 40 - 50 | 1300 - 1500 | 11,5 | Nb |
| 40 - 50 | 1300 - 1500 | 12,0 | Ta |
| 40 - 50 | 1300 - 1500 | 16,0 | Edelstahl |
| ~ 60 | 1800 - 2000 | 12,0 | W |
| ~ 60 | 1800 - 2000 | 12,5 | Mo |
| ~ 60 | 1800 - 2000 | 15,0 | Nb |
| ~ 60 | 1800 - 2000 | 15,0-16,0 | Ta |
| ~ 60 | 1800 - 2000 | nicht er-reichbar mit Edel-stahl | Edelstahl |
| ~ 110 - 120 | 850 - 950 | 13,9 | W |
| ~ 110 - 120 | 850 - 950 | 16,8 | Mo |
| ~ 110 - 120 | 850 - 950 | 18,5 | Nb |
| ~ 110 - 120 | 850 - 950 | 20,5 | Ta |
| ~ 110 - 120 | 850 - 950 | 30,0 | Edelstahl |

Alle untersuchten Metalle weisen einen merklichen Abstand zu Edelstahl auf: nur 50 - 60 Prozent der erforderlichen Energie müssen bei der Verwendung von Wolfram im Vergleich zu Edelstahl aufgewendet werden, um dieselbe Ozonmenge bei gleicher Konzentration zu erzeugen.

Hinsichtlich der anderen untersuchten Elektroden ist die Rangfolge:

$$A(W) \approx A(Mo) > A(Nb) \approx A(Ta) > A(Edelstahl)$$

Das Verhältnis der Kehrwerte der Energieausbeuten zu denen von Wolfram ergibt sich für die Meßreihen wie folgt:

| c | P/F | $\dfrac{A(W)}{A(W)}$ | $\dfrac{A(W)}{A(Mo)}$ | $\dfrac{A(W)}{A(Nb)}$ | $\dfrac{A(W)}{A(Ta)}$ | $\dfrac{A(W)}{A(Edel-stahl)}$ |
|---|---|---|---|---|---|---|
| 40-50 | 1300-1500 | 1 | 1,11 | 1,27 | 1,36 | 1,78 |
| 60 | 1800-2000 | 1 | 1,04 | 1,25 | 1,29 | — |
| 110-120 | 850-950 | 1 | 1,20 | 1,33 | 1,47 | 2,15 |

Demnach liegen besondere Vorteile bei der Verwendung von Wolfram-Elektroden, sofern auf die Ozon-

4

erzeugung bei hohen Konzentrationen Wert gelegt wird.

Mit einer entsprechenden Anordnung, die aus 10 parallel geschalteten Einzelröhren nach Fig. 1 aus $Al_2O_3$ bestand, mit einem Außendurchmesser von 8 mm, einer Wandstärke von 1 mm, einer Länge von 1 m und einer Wendel aus Wolfram (Durchmesser < 1 mm) wurden aus Sauerstoff 12 g Ozon/h mit einer Konzentration von 400 $g/m^3$ erzeugt.

Der Energieaufwand betrug ca. 37 Wh/g. Davon sind 6 Wh/g vermeidbare Verluste der speziellen verwendeten elektrischen Anspeisung, so daß an der Anordnung lediglich 31 Wh/g umgesetzt wurden. Entsprechend wurden bei 300 g Ozon/$m^3$ 54 g/h mit einem Energieaufwand von 26 Wh/g Ozon bzw. abzüglich der Verluste der Anspeisung 21 Wh/g Ozon erzielt.

Mit Wendeln aus Edelstahl konnten nur Ozonkonzentrationen unterhalb von 300 $g/m^3$ erreicht werden.

Es hat sich gezeigt, daß kein einfacher physikalisch zu erwartender Zusammenhang zwischen der Ausbeutesteigerung und einer physikalischen Kenngröße, wie beispielsweise der Elektronenaustrittsarbeit, besteht, die für Wolfram 4,53 eV, für Molybdän 4,24 eV, für Niob 3,99 eV, für Tantal 4,13 eV und für Edelstahl 4,6 eV beträgt.

Neben Entladungselektroden aus Edelstahl wurden weitere Materialien, von denen eine hohe Widerstandsfähigkeit gegen Oxidation und gute Eignung für die Ozonerzeugung erwartet wurden, untersucht, nämlich Nickel - massiv, Edelstahl mit elektrolytischer Ni-, PdNi-, PdCr- und einer weiteren Chromlegierungs-Beschichtung. Dabei wurden überraschenderweise hinsichtlich Konzentration und Energieausbeute negative Ergebnisse erzielt, nämlich Werte, die nur 30 - 50 % der Werte von Edelstahl betragen (unter gleichen Versuchsbedingungen). Zudem wiesen sie eine extrem schnelle Alterung auf: Innerhalb von ca. 20 Betriebsstunden sanken die Werte auf 10 % und weniger der Anfangswerte. Bei Edelstahl beträgt die Alterung lediglich 10 - 20 % während 5000 h, bei Wolfram unter bis maximal 5 %.

Es ist somit zu erkennen, daß insbesondere mit Wolfram und Molybdän aber auch mit Niob und Tantal unerwartet ein Material gefunden wurde, das die gestellte Aufgabe in hervorragender Weise löst.

## Patentansprüche

1. Vorrichtung zur Erzeugung von Ozon aus Sauerstoff mit mindestens einer Entladungselektrode und Gegenelektrode, die durch ein Dielektrikum hoher Wärmeleitfähigkeit getrennt sind und eng an diesem Dielektrikum anliegen, das direkt gekühlt wird, wobei die von Sauerstoff umströmte Entladungselektrode eine nichtgeschlossene Fläche bildet und drahtartig ausgeführt ist und durch Anlegen eines elektrischen Feldes eine Entladung im sie umgegenden Gasraum und auf dem Dielektrikum auslöst, **dadurch gekennzeichnet,** daß die Entladungselektrode aus Molybdän, Wolfram, Niob oder Tantal besteht und dieses Material direkt dem Sauerstoff ausgesetzt ist.

2. Vorrichtung nach Anspruch 1, dadurch gekennzeichnet, daß die Entladungselektrode aus einem metallischen Leiter besteht, der mit mindestens einem der genannten Materialien beschichtet ist, wobei die Schichtdicke so bemessen ist, daß die Schicht die metallischen Eigenschaften der Materialien aufweist.

3. Vorrichtung nach Anspruch 1, dadurch gekennzeichnet, daß das Dielektrikum rohrförmig ausgebildet ist und die Entladungselektrode spiralförmig an dem Rohr anliegt, wobei der Drahtdurchmesser zwischen 1 mm und 0,2 mm liegt, vorzugsweise 0,5 mm beträgt.

## Claims

1. Apparatus for obtaining ozone from oxygen having at least one discharge electrode and counter electrode, which are separated by a dielectric of high thermal conductivity and lie close to this dielectric, which is directly cooled, so that the discharge electrode around which the oxygen flows forms an unclosed surface and is fashioned as a wire and by generating an electric field triggers a discharge in the gas space surrounding it and on the dielectric, characterised in that the discharge electrode comprises molybdenum, tungsten, niobium or tantalum and this material is directly exposed to the oxygen.

2. Apparatus according to claim 1, characterised in that the discharge electrode comprises a metallic conductor which is coated with at least one of the materials referred to, in which the coating thickness is so selected that the coating exhibits the metallic properties of the material.

3. Apparatus according to claim 1, characterised in that the dielectric is formed as a tube and the discharge electrode lies helically in the tube, the diameter of the wire being between 1 mm and 0.2 mm, preferably 0.5 mm.

## Revendications

1. Dispositif pour l'obtention d'ozone à partir d'oxygène avec au moins une électrode de décharge et une contre électrode qui sont séparées par un diélectrique à haute conductibilité thermique et qui sont en contact étroit avec ce diélectrique qui est directement refroidi, l'électrode de décharge environné par un courant d'oxygène formant une surface non fermée et étant réalisée sous la forme d'un fil et produisant une décharge dans le volume de gaz l'environnant et sur le diélectrique par l'établissement d'un champ électrique, caractérisé en ce que l'électrode de décharge est constituée par du Molybdène, du Tungstène, du Niobium ou du Tantale et en ce que ce matériau est directement au contact de l'oxygène.

2. Dispositif selon la revendication 1, caractérisé en ce que l'électrode de décharge est constituée par un conducteur métallique qui est recouvert par au moins l'un des matériaux cités, l'épaisseur de la couche de revêtement étant telle que cette couche présente les propriétés métalliques du matériau utilisé.

3. Dispositif selon la revendication 1, caractérisé en ce que le diélectrique est réalisé sous la forme tubulaire et en ce que l'électrode de décharge a la forme d'une spirale qui est au contact du tube, le diamètre du fil se situant entre 1 mm et 0,2 mm et ayant de préférence la valeur de 0,5 mm.

Fig.1